# EUROPEAN PATENT SPECIFICATION

(11) **EP 4 599 539 B1**
(45) Date of publication and mention of the grant of the patent: **07.10.2026**
(21) Application number: 23768746.2
(22) Date of filing: 16.08.2023
(51) Int. Cl.: H04L 1/1829, H04L 1/1867

(54) **COMMUNICATIONS SYSTEM USING COMMON AND PRIVATE CODEWORDS**
KOMMUNIKATIONSSYSTEM MIT GEMEINSAMEN UND PRIVATEN KODEWÖRTERN
SYSTÈME DE COMMUNICATION UTILISANT DES MOTS DE CODE COMMUNS ET PRIVÉS

(30) Priority: 04.10.2022 US 202217959949
(43) Date of publication of application: 13.08.2025
(73) Proprietor: QUALCOMM INCORPORATED, San Diego, California 92121-1714 (US)
(72) Inventor: KHOSHNEVISAN, Mostafa, San Diego, California 92121-1714 (US); SUN, Jing, San Diego, California 92121-1714 (US); PRAKASH, Rajat, San Diego, California 92121-1714 (US); ZHANG, Xiaoxia, San Diego, California 92121-1714 (US); ZEWAIL, Ahmed Abdelaziz Ibrahim Abdelaziz, San Diego, California 92121-1714 (US); FAN, Zhifei, San Diego, California 92121-1714 (US); CHENDAMARAI KANNAN, Arumugam, San Diego, California 92121-1714 (US)
(74) Representative: Tomkins & Co
(86) International application number: PCT/US2023/072324
(87) International publication number: WO 2024/076803

(56) References cited:
- WO-A1-2018/031135
- WO-A2-2012/064998

## Description

### FIELD OF DISCLOSURE

The following relates to the field of wireless communications. Particularly, example aspects of this disclosure relate to wireless communications such as, but not exclusively, between user entities (UEs) and network entities (NEs) through the use of common and private message parts.

### DESCRIPTION OF RELATED ART

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, singlecarrier frequency-division multiple access (SC- FDMA) systems, time division synchronous code division multiple access (TD-SCDMA) systems, and Long Term Evolution (LTE). LTE/LTE- Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A user equipment (UE) may communicate with a base station (BS) via the downlink and uplink. The downlink (or forward link) refers to the communication link from the BS to the UE, and the uplink (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, and/or the like.

The above multiple access technologies have been adopted in various telecommunication standards to provide a common protocol that enables different user equipment to communicate on a municipal, national, regional, and even global level. New Radio (NR), which may also be referred to as 5G, is a set of enhancements to the LTE mobile standard promulgated by the Third Generation Partnership Project (3GPP). NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation.

WO2012/064998 A2 discloses techniques for inter-cell interference cancellation. At each transmitter, the data (message) may split into two or more layers, (e.g., common and private parts), and may be encoded in different rates, allocated with different powers, possibly beamformed using different precoders, and transmitted through the same physical channels. The common part is to be decoded at both the intended and unintended users, while the private part is to be decoded at the intended user.

WO2018/031135 A1 discloses that reporting to network and network selection of medium access control and physical layer capabilities can be performed between a user equipment (UE) and the network (such as a radio access network (RAN) node). For example, UE capability information or RRC dedicated signaling is used to transfer the information of the capability of UEs regarding the support of media access control (MAC), physical layer (PHY) or a combination of MAC and PHY configurations and/or minimum hybrid automatic repeat request (HARQ) round trip time (RTT) to the network. The network can indicate which configurations will be allowed and/or enabled for use by this UE or for a group of UEs. The network can also switch the UEs between the different supported configurations.

### SUMMARY

There is a need for a new communications system that is efficient in use of communications resources and is reliable. Rate splitting techniques that split a message into a common part and a private part offer promise in these respects, but to achieve both efficiency and reliability, consideration needs to be given to how acknowledgements are to be handled.

According to a first aspect of the present disclosure, a method of communication performed by a user entity according to claim 1 is provided.

Also provided is an apparatus at a user entity according to claim 13. The invention is defined by the appended claims.

### BRIEF DESCRIPTION OF THE DRAWINGS

Fig. 1 is a diagram illustrating an example of a wireless network, in accordance with various aspects of the present disclosure.
Fig. 2 is a diagram illustrating an example of a network entity station in communication with a UE in a wireless network, in accordance with various aspects of the present disclosure.
Fig. 3 is a process flow diagram of a process of transmission of a message at a network entity (NE).
Fig. 4 is a process flow diagram of a process of reception of the message at a UE.
Fig. 5 is a more detailed process flow diagram of steps in a process of reception at a UE.
Fig. 6 is an illustration of a circular buffer at a UE, implemented in hardware or software.
Fig. 7 is a process flow diagram of a process of reception at a UE with HARQ feedback.
Fig. 8 and 9 are state diagrams showing possible states in a process of reception at a UE, according to different behaviors.
Fig. 10 is a flow diagram of an acknowledgement process at a UE.
Fig. 11 is a flow diagram of an acknowledgement process at a NE.
Figs. 12 and 13 show flowcharts illustrating methods that support communications using common and private codewords in accordance with one or more aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art.. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

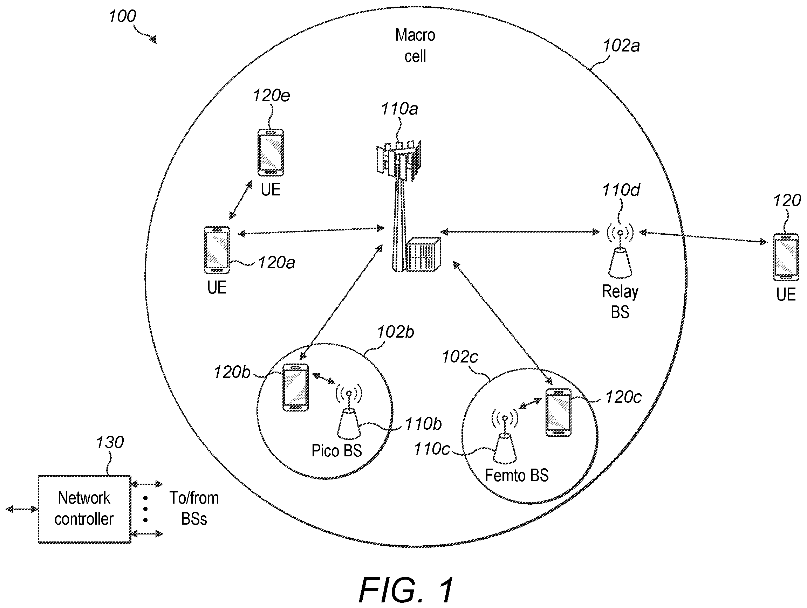

Fig. 1 is a diagram illustrating an example of a wireless network 100, in accordance with various aspects of the present disclosure. The wireless network 100 may be or may include elements of a 5G (NR) network, an LTE network, and/or the like. The wireless network 100 may include a number of base stations 110 (shown as BS 110a, BS 110b, BS 110c, and BS 110d) and other network entities (NEs). A base station (BS) is an entity that communicates with user equipment (UEs) and may also be referred to as an NR BS, a Node B, a gNB, a 5G node B (NB), an access point, a transmit receive point (TRP), and/or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometres in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. In some examples, the NE may be implemented in a disaggregated architecture (e.g., a disaggregated base station architecture, a disaggregated RAN architecture), which may be configured to utilize a protocol stack that is physically or logically distributed among two or more NEs, such as an integrated access backhaul (IAB) network, an open RAN (O-RAN) (e.g., a network configuration sponsored by the O-RAN Alliance), or a virtualized RAN (vRAN) (e.g., a cloud RAN (C-RAN)). For example, a NE may include one or more of a central unit (CU), a distributed unit (DU), a radio unit (RU), a RAN Intelligent Controller (RIC) (e.g., a Near-Real Time RIC (Near-RT RIC), a Non-Real Time RIC (Non-RT RIC)), a Service Management and Orchestration (SMO) system, or any combination thereof. One or more components of the NEs in a disaggregated RAN architecture may be co-located, or one or more components of the NEs may be located in distributed locations (e.g., separate physical locations). In some examples, one or more NEs of a disaggregated RAN architecture may be implemented as virtual units (e.g., a virtual CU, a virtual DU, a virtual RU). The split of functionality between a CU, a DU, and an RU is flexible and may support different functionalities depending on which functions (e.g., network layer functions, protocol layer functions, baseband functions, RF functions, and any combinations thereof) are performed. The terms "eNB", "base station", "NR BS", "gNB", "TRP", "AP", "node B", "5G NB", RU, NE and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces such as a direct physical connection, a virtual network, and/or the like using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, and/or the like.

Wireless network 100 may be a heterogeneous network that comprises BSs of different types, e.g., macro BSs, pico BSs, femto BSs, relay BSs, and/or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, and/or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, location tags, and/or the like, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things ( IoT) devices, and/or may be implemented as NB-IoT (narrowband internet of things) devices. Some UEs may be considered a Customer Premises Equipment (CPE). UE 120 may be included inside a housing that houses components of UE 120, such as processor components, memory components, and/or the like. In some aspects, the processor components and the memory components may be coupled together. For example, the processor components (e.g., one or more processors) and the memory components (e.g., a memory) may be operatively coupled, communicatively coupled, electronically coupled, electrically coupled, and/or the like.

In general, any number of wireless networks may be deployed in a given geographic area. Each wireless network may support a particular RAT and may operate on one or more frequencies. A RAT may also be referred to as a radio technology, an air interface, and/or the like. A frequency may also be referred to as a carrier, a frequency channel, and/or the like. Each frequency may support a single RAT in a given geographic area in order to avoid interference between wireless networks of different RATs. In some cases, NR, 5G or 6G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to- vehicle (V2V) protocol, a vehicle-to-infrastructure (V2I) protocol, and/or the like), a mesh network, and/or the like. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, and/or the like. For example, devices of wireless network 100 may communicate using an operating band having a first frequency range (FR1), which may span from 410 MHz to 7. 125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

As indicated above, Fig. 1 is provided as an example. Other examples may differ from what is described with regard to Fig. 1.

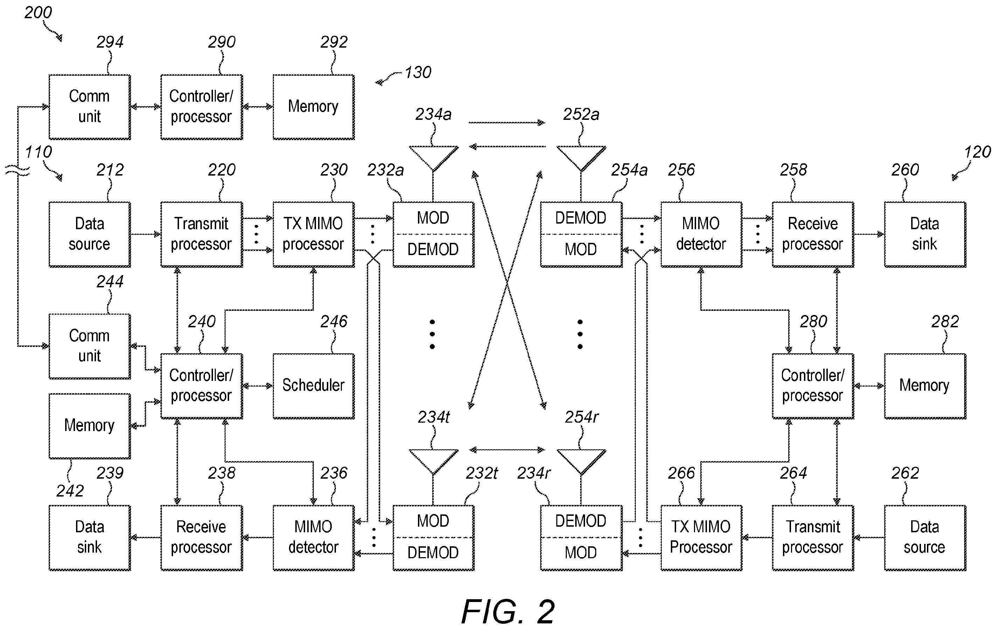

Fig. 2 is a diagram illustrating an example 200 of a base station 110 in communication with a UE 120 in a wireless network 100, in accordance with various aspects of the present disclosure. Base station 110 may be equipped with T antennas 234a through 234t, and UE 120 may be equipped with R antennas 252a through 252r, where in general T > I and R > 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., a cell-specific reference signal (CRS), a demodulation reference signal (DMRS), and/or the like) and synchronization signals (e.g., the primary synchronization signal (PSS) and secondary synchronization signal (SSS)). A transmit (TX) multiple-input multiple -output (MIMO) processor 230 may perform spatial processing (e.g., precoding) on the data symbols, the control symbols, the overhead symbols, and/or the reference symbols, if applicable, and may provide T output symbol streams to T modulators/demodulators (MODs/DEMODs) 232a through 232t. Each modulator/demodulators may process a respective output symbol stream (e.g., for OFDM and/or the like) to obtain an output sample stream. Each modulator/demodulator 232a through 232t may further process (e.g., convert to analog, amplify, filter, and upconvert) the output sample stream to obtain a downlink signal. T downlink signals from modulators/demodulators 232a through 232t may be transmitted via T antennas 234a through 234t, respectively.

At UE 120, antennas 252a through 252r may receive the downlink signals from base station 110 and/or other base stations and may provide received signals to demodulators (DEMODS) 254a through 254r respectively. (In the reverse direction DEMODS 254 are also modulators and will be referred to by either term.) Each demodulator 254 may condition (e.g., filter, amplify, downconvert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine reference signal received power (RSRP), received signal strength indicator (RSSI), reference signal received quality (RSRQ), channel quality indicator (CQI), and/or the like. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

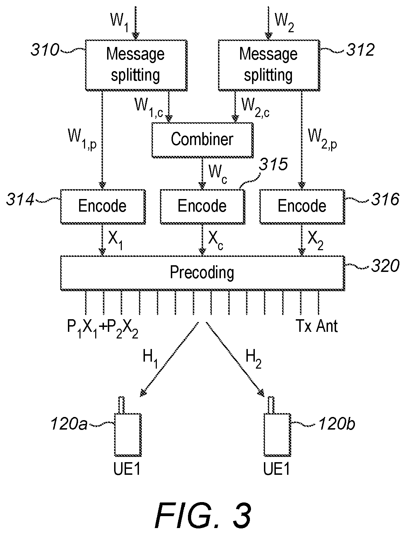

On the uplink, at UE 120, a transmit processor 264 may receive and process data from a data source 262 and control information (e.g., for reports that include RSRP, RSSI, RSRQ, CQI, and/or the like) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM, CP-OFDM, and/or the like), and transmitted to base station 110. In some aspects, the UE 120 comprises a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein, for example, as described with reference to Figs. 3-10.

At base station 110, the uplink signals from UE 120 and other UEs may be received by antennas 234, processed by modulators/demodulators 232a through 232t, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, the base station 110 comprises a transceiver. The transceiver may include any combination of antenna(s) 234, modulators/demodulators 232a through 232t, MIMO detector 236, receive processor 238, transmit processor 220, and/or TX MIMO processor 230. The transceiver may be used by a processor (e.g., controller/processor 240) and memory 242 to perform aspects of any of the methods described herein, for example, as described with reference to Figs. 3-10.

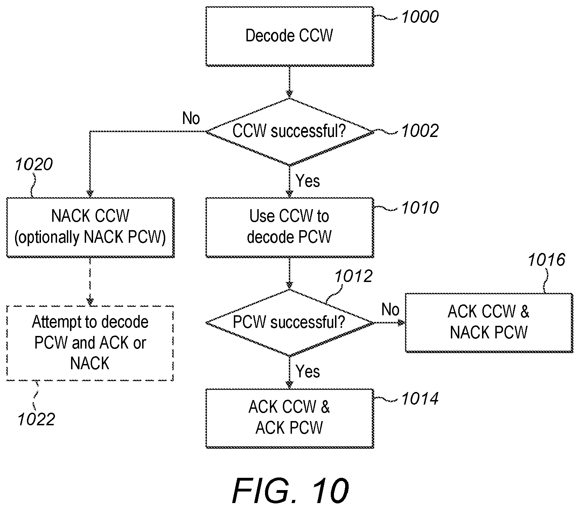

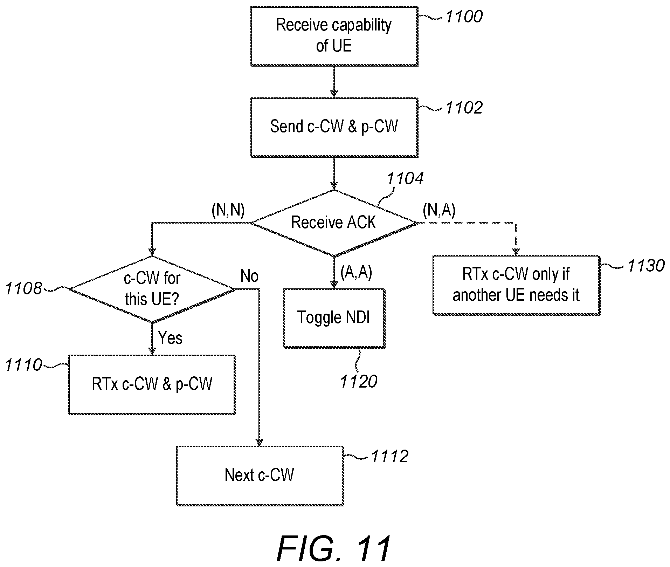

Controller/processor 240 of base station 110, controller/processor 280 of UE 120, and/or any other component(s) of Fig. 2 may perform or direct operations of, for example, those of Figs. 3 to 11 described herein, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code, program code, and/or the like) for wireless communication. For example, the one or more instructions, when executed (e.g., directly, or after compiling, converting, interpreting, and/or the like) by one or more processors of the base station 110 and/or the UE 120, may cause the one or more processors, the UE 120, and/or the base station 110 to perform or direct operations of, for example, those of Figs. 10 and 11 and/or other processes as described herein. In some aspects, executing instructions may include running the instructions, converting the instructions, compiling the instructions, interpreting the instructions, and/or the like.

The, the network entity (gNB, TRP or the like) and UE may implement a plurality of hybrid automatic repeat request (HARQ) processes, associated with a configured scheduling process, for forward error correction for downlink communication and/or uplink communication. An HARQ process may store, in a buffer memory, a received original communication and any received retransmissions of the communication that are associated with a particular process instance (which may include a semi-persistent scheduling transmission in the case of downlink communication or may include a grant-free transmission or an uplink configured grant transmission in the case of uplink communication) of the configured scheduling process. In this way, the original communication and the received retransmission(s) may be combined (which may be referred to as "soft combining", as described below) to correct any errors that may have occurred in the original communication.

In some aspects, a UE (e.g., UE 120) may include means for receiving a communication from a network entity (NE), means for transmitting, to the NE, HARQ-ACK feedback based at least in part on the communication received from the NE. In some aspects, such means may include one or more components of UE 120 described in connection with Fig. 2, such as controller/processor 280, transmit processor 264, TX MIMO processor 266, MOD/DEMOD 254, antenna 252, MIMO detector 256, receive processor 258, and/or the like.

In some aspects, a UE (e.g., UE 120) may include means for transmitting data to a NE, means for receiving, from the NE, HARQ-ACK feedback based at least in part on the data transmitted to the NE. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

A rate splitting (RS) scheme is described as follows. A message directed to a UE is split into a common part W_{c} and a private part Wₚ, where W_{c} consists of common portion of multiple individual messages and Wₚ is directed to a specific UE. W_{c} is encoded into the stream using a common (or public) codebook, and hence is decoded or demodulated by all users, while each Wₚ is encoded into the private stream using private or individual codebooks. The streams are linearly precoded using precoders *P_{c}, P₁, P₂,* where *P_{c}* is the common precoder, to provide a stream *X = P_{c}X_{c} + P*₁*X*₁ *+ P*₂*X*₂*.* After transmission through an antenna port represented by matrix *H₁,* the resulting transmit signal can be expressed as: ${Y}_{1} = {H}_{1} {P}_{c} {X}_{c} + {H}_{1} {P}_{1} {X}_{1} + {H}_{1} {P}_{2} {X}_{2} + {N}_{1} .$

The scheme differs from a mere super-position of MU beamforming and multicast beamforming in that the transmission of the common message has a fundamentally different purpose. In particular, multicast transmission sends information requested by, and directed to, multiple users in the system. On the other hand, the common message in rate splitting encapsulates part of the rate-splitting user's private message, which is decoded by all users in the system for interference mitigation and performance enhancement purposes.

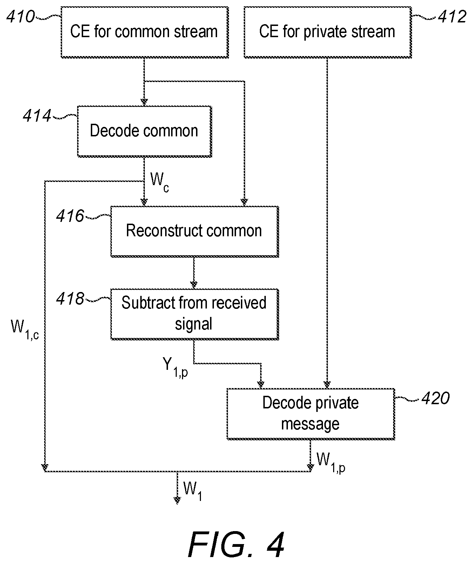

A rate-splitting technique will be further described with reference to Figs. 3 and 4. Two messages 310 and 312 are shown from message streams W₁ and W₂ to be sent from BS 110a to two UEs, e.g. UEs 120a and 120b. Messages for individual UEs are split into common and private parts. Message 310 is split into private part W_{1,p} and common part W_{1,c} and message W₂ is split into common part W_{2,c} and private part W_{2,p}. Part W_{1,p} is encoded in encoder 314. Part W_{2,p} is encoded in encoder 316. The common parts of the individual messages are concatenated into a common message *W_{c}* which is encoded in encoder 315. Encoders 314-316 are shown as blocks and may be implemented in hardware or as software functions in a digital signal processor.

The described principle applies for more than two messages. Each message is split into two parts. The common parts for two or more UEs are concatenated into one part and encoded.

The encoders also perform modulation and mapping to one or more layers. A "layer" may refer to a spatial layer in a MIMO arrangement or some other multiplexed layer separated by frequency, code or other layering arrangement.

The private parts of individual messages (*W*_{1,*p*} and *W*_{2,*p*}) are separately encoded and modulated to private streams (*X*₁ and *X*₂) for the corresponding UE.

The common part is modulated to *X_{c},* which is referred to as the "common stream", and can have one or more layers. The common stream is precoded by *P_{c}*. The common stream is transmitted from an array of Tx antennas from one BS 110a (or TRP, gNB, etc) or, in a co-ordinated multipoint (CoMP) scenario, it is transmitted from multiple TRPs.

The private streams are precoded by *P*₁ and *P*₂, respectively, in precoder 320 and these streams are transmitted by Tx antennas (from one TRP/gNB or multiple TRPs in CoMP scenario) to the destination UEs 120a and 120b (and any others).

At a receiver of a UE, e.g., UE 120a, as shown in Fig. 4, channel estimation is performed at 410 for the common stream and at 412 for the private stream. Separate channel estimation for each stream is performed because they are in different layers. Using the channel estimate (CE) for the common stream, that stream is decoded at 414. All being well, this will result in decoding of the common message *W_{c}*. which comprises the common part *W*_{1,*c*} of message streams W₁ which represents data directed to the UE.

In some implementations when the UE performs successive interference cancelation (SIC), the common message *W_{c}* (where *W* are the information bits before encoding) is further used for SIC to decode the private message. This is achieved by estimating the effective channel corresponding to the common stream (*H*₁*P_{c}*), decoding the common message *W_{c}* as described, re-encoding the common message at 416 to the common stream *X_{c},* multiplying the common stream *X_{c}* by the estimated effective channel and subtracting at 418 from the received signal.

If one assumes perfect channel estimation and successful decoding: ${Y}_{1 , p} = {Y}_{1} - {H}_{1} {P}_{c} {X}_{c} = {H}_{1} {P}_{1} {X}_{1} + {H}_{1} {P}_{2} {X}_{2} + {N}_{1} ,$ where *X* (modulated signal) is a function of *W* (raw information bits) and *Y* is the received signal at the UE after the encoded *W* bits are modulated, mapped to layers, precoded, and passed through the wireless channel.

Thus, at 420, UE1 decodes the private message using *Y*_{1,*p*} to provide the private codeword *W*_{1,*p*}.

Steps 414 and 420 in Fig. 4 also include demodulation and demapping in addition to decoding.

Instead of performing SIC, the UE may perform joint demodulation or joint decoding. Joint decoding is more complicated as it involves decoding two messages in a joint manner. Joint demodulation involves generating log likelihood ratios (LLRs) for coded bits of the common message and private message taking into account the interlayer interference, which is also referred to as maximum likelihood (or reducedcomplexity maximum likelihood) demodulation.

In instances where the UE does not perform SIC and the c-CW does not include information for the UE, the UE may not attempt to decode the c-CW, but may still attempt to demodulate the c-CW, since joint demodulation of the c-stream and the p-stream enhances the chance of decoding the p-CW.

This process of splitting into common and private streams achieves increased capacity and/or other benefits.

After receipt of a message or messages of the reconstructed stream, Wc, the UE 120a is able to send an acknowledgement (ACK) of receipt and/or a negative acknowledgement (NACK) indicating incomplete reception (or reception failure).

In the event of sending of a NACK from the UE to the BS 110a, the BS 110a can schedule a retransmission. The exact timing of retransmission can depend on the preferred hybrid automatic repeat request (HARQ) scheme. There are a number of options for how the UE can send a NACK, and a number of options for what the BS 110a sends retransmission in response. Upon receiving a repeated transmission, there are various ways by which the UE can combine the original transmission with the repeated transmission to decode a particular message or message part. These methods of combining are generally referred to as "soft combining".

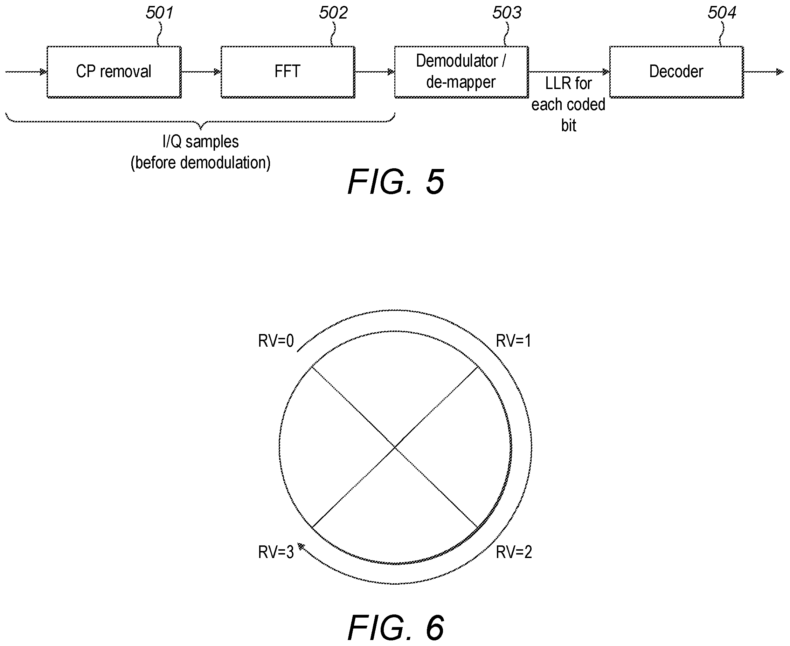

Soft combining can take place either in the domain of I and Q samples of received signals or in the domain of log-likelihood ratios (LLRs). This is explained with reference to Fig. 5.

There may be a maximum number of HARQ retransmissions configured for each UE. This may be configured by the Radio Resource Control (RRC) layer to a constant number (e.g. 4). What happens when this number is reached can depend on the mode of operation. For example, the radio link control (RLC) process can start re-transmitting the data, so for every RLC single re-transmission, the HARQ process will re-start and repeat up to its maximum number of retransmissions. If, upon re-starting, the RLC maximum retransmission occurs again, the RLC can declare a radio link failure (RLF) and follow a RLF procedure. Alternatively once the HARQ maximum retransmission is reached, the transport block (TB) may be discarded and the transmit process may move on to the next TB.

Fig. 5 illustrates certain processes which can take place, for example, in the receive processor 258 of the UE. It shows a cyclic prefix removal stage, 501, a fast-Fourier transform stage, 502, a demodulator/demapper stage 503 and a decoder stage 504.

In operation, the cyclic prefix removal stage 501 removes any cyclic prefix from received samples and, through fast-Fourier transformation, a symbol is derived with in-phase and quadrature (I/Q) components. These can optionally be stored for later use as will be described. The I/Q samples are subjected to demodulation and demapping to derive log-likelihood ratios (LLRs). These represent the confidence level of a given symbol being demodulated to a given result. These LLRs can be stored for later use.

LLRs are preferably stored in a circular buffer, as illustrated in Fig. 6. As shown, multiple redundancy versions of a transport block (TB) can be stored, represented by RV=0 to RV=3. RV=0 represents an initial transmission. A first retransmission is represented by a value selected by the network (which may be RV=1 or RV=2 or RV=0 may be used again). The number of resources does not necessarily occupy the whole buffer. If a retransmission comprises some of the coded bits already transmitted, those repeated coded bits do not require extra buffer space due to the property of the circular buffer. Many retransmissions may be received and stored, and the buffer can re-circulate. It can re-circulate multiple times. The starting point for storing of each retransmission is configured according to the indicated RV for the respective retransmission, since later redundancy versions may be of different lengths, e.g., may have more parity bits.

A circular buffer is not essential. Redundant versions can be saved and accumulated in the LLR domain in other ways. A circular buffer, however, is an efficient mechanism for maintaining a sliding set of redundant LLR values.

Thus, for soft-combing in the LLR domain, the UE stores LLRs corresponding to a TB that is not decoded (in an initial transmission), and soft combines with LLRs of retransmission(s). The size of the circular buffer determines the buffer size at the UE (for each HARQ process ID) no matter how many retransmissions or the size of each allocation.

Limited buffer rate matching (LBRM) and circular buffer size determination ensures excessive memory is avoided for soft-combining. ${N}_{cb} = min \left(N, {N}_{ref}\right) otherwise , where {N}_{ref} = \left⌊\frac{{TBS}_{LBRM}}{C ⋅ {R}_{LBRM}}\right⌋ ,$ where TBS is transport size block and *R*_{LBRM} and *TBS*_{LBRM} are defined in TS38.212, subclause 5.4.2.1.

For a given initial transmission of common CW (c-CW) and private codeword (p-CW) on different spatial layers, different ACK/NACK responses are possible, depending on the decoding outcome. Four possible responses may be provided for: (A, A), (A, N), (N, A) and (N, N) as follows.

(A,A) indicates successful reception of the c-CW and the p-CW. There is no need for any retransmission. The network may retransmit the c-CW at the request of another UE, but the UE making the acknowledgement can ignore such re-transmission.

(A, N) indicates ACK for the c-CW and NACK for the p-CW. In this case, the network may schedule only the p-CW for re-transmission. The UE already has LLRs of the p-CW of the initial transmission and can soft combine in the LLR domain. Regular LBRM and circular buffer size determination applies. Optionally, the network may schedule a new c-CW, e.g. if another UE has issued a NACK for the c-CW.

(N, A) indicates NACK for the c-CW and ACK for the p-CW. This is a lowprobability event, because in the event that the c-CW is not decoded, the p-CW is probably also not decoded (because decoding of the p-CW generally requires subtracting of the reconstructed c-CW at least when the UE performs SIC). In this case, the network may schedule only the c-CW. The UE already has LLRs of the c-CW of the initial transmission and can soft combine in the LLR domain with the re-transmitted c-CW. This will be referred to herein as "behavior 1". Regular LBRM and circular buffer size determination applies.

Alternatively, the network may additionally schedule a new p-CW. This would be advantageous if the UE is programmed to skip decoding the p-CW where the c-CW is not decoded (e.g. in the case of a UE that performs SIC before decoding of the p-CW).

(N, N) indicates NAK for both c-CW and p-CW. In this case the network will schedule both the c-CW and the p-CW for re-transmission. For the c-CW, the UE already has LLRs and regular LBRM and circular buffer size determination applies. For the p-CW, a new framework may be needed, as the UE may not have tried to decode or calculate LLRs for the p-CW if the c-CW has not been decoded in the initial transmission (e.g. in the case of a UE that performs SIC first). Even if the UE still tries to decode the p-CW without SIC, it may not be appropriate to soft combine in the LLR domain, as the LLRs may be too noisy.

For the UE to be able to soft combine a p-CW of an initial transmission and retransmission, the UE needs to store not only the received I/Q samples (received signal before demodulation either in frequency domain or time domain) but also needs to store the estimated channel for the common stream. These requirements impose certain buffer size requirements.

When there is a new transmission of data in a HARQ process, a new data indicator (NDI) may be toggled by the transmitting entity (e.g. from "0" to "1") to indicate new data. There is preferably an NDI for the c-CW and another NDI for the p-CW. The NDI for the c-CW is toggled when all ACKs are received for the c-CW from all intended UEs or at least for the particular UE receiving downlink control information (DCI) that schedules a new transmission at least for the c-CW of the same HARQ ID. The NDI for the p-CW is toggled when an ACK is received from the intended UE. The NDI bit is toggled for a particular HARQ ID and the transmission along with that toggled NDI represents new data.

Note that in the case of behavior 1, there are just three HARQ-ACK feedback possibilities for (c-CW, p-CW). These are: (N,N), (A,N), and (A,A). I.e. (N,A) is not possible (because the UE skips decoding of the p-CW if the c-CW is not decoded).

This observation can be used to compress the HARQ-ACK codebook, as the codebook can be formed using only three states instead of four states for a PDSCH. For example, for 3 PDSCHs each with c-CW and p-CW, the HARQ-ACK codebook can be formed using at most log2(3*3*3) bits, i.e., 5 bits, instead of 6 bits which may be required if there was no such compression. Accordingly, the method may comprise combining, at the UE, acknowledgement states for plural downlink channels to provide compression of the combined acknowledgements. The plural channels may be plural spatial channels or time/frequency and/or code divided channels.

In accordance with behavior 1, there are a number of sub-possibilities.

First the case will be considered where part of the c-CW contains information directed to this UE 120a. This can be a dynamic indication in the DCI scheduling the PDSCH or can be a semi-static configuration indicated by the RRC or MAC-CE. This will be referred to as "Case A".

Within Case A, a first option is that (where the UE transmits NACK for c-CW of the previous transmission) the UE does not perform soft-combining for the p-CW of the previous transmission and the current retransmission. This will be the case where the UE does not store the received I/Q samples of the first transmission. In this case, soft-combining for the p-CW is not possible. This will be referred to as behavior 1A-1.

Within Case A, a second option is that the UE stores the received I/Q samples of the initial transmission and hence can soft combine these (in the I/Q domain) with the c-CW of the retransmission to decode the c-CW. The UE then performs SIC for the initial transmission having decoded the c-CW from the retransmission. This will be referred to as behavior 1A-2. In this case, soft combining for the p-CW is still possible when the c-CW was not initially decoded. This behavior requires the additional I/Q buffering at the UE.

Now the case will be considered where no part of the c-CW contains information directed to this UE 120a and it contains information only for other UEs 120b and/or 120c etc. This will be referred to as "Case B". In this case, the c-CW is useful to UE 120a only for SIC purposes. Retransmission of the c-CW can be useful to UE 120a, but only if it has a certain behavior.

If the UE does not store the received I/Q samples, soft-combining for the p-CW is not possible when the c-CW is not decoded. In this case, soft-combining for c-CW may also not be useful, since the only reason to decode the c-CW is for SIC, but SIC is not performed for the initial transmission when the c-CW is not decoded. This will be referred to as behavior 1B-1.

Accordingly, in this scenario, where the c-CW contains no information of interest to a given UE, the network may refrain from re-transmitting the c-CW if the only UE sending a NACK for the c-CW is a UE for which the c-CW is not specifically intended (particularly but not exclusively where that UE is known by the network to operate according to behavior 1).

Note, however that the gNB may still need to retransmit the c-CW if another UE 120b-120e has also not decoded the c-CW in the initial transmission. In this case, soft-combining for the c-CW at UE 120a may be still be useful, so that it can decode the p-CW from the retransmission (but without soft-combining for the p-CW). Under this assumption, the behavior is the same as behavior 1A-1.

If the other UE 120b-120e has already decoded the c-CW (or if the gNB sends the c-CW to the other UE separately - i.e., not through rate splitting in the retransmission), then the behavior is as follows: (i) the UE 120a does not perform soft-combining for the c-CW; (ii) the NDI for the c-CW is not needed (it is not signaled in scheduling DCI) or is ignored given that the c-CW does not include information for the UE - instead, the UE 120a assumes the NDI for the c-CW is toggled (indicating no need to perform soft combining); and (iii) the UE 120a does not perform soft-combining for the p-CW of the previous transmission and the current retransmission if the UE transmits NACK for the c-CW of the previous transmission. This is similar to behavior 1A-1.

Next (within behavior 1, case B), the case can be considered where the UE has the ability to store the received I/Q samples. This can be referred to as behavior 1B-2 and it is the same as behavior 1A-2. In this case, soft-combining for the c-CW is still useful for the purpose of SIC.

In summary, where part of the c-CW contains information directed to the UE 120a (Case A), retransmission of c-CW is still useful so that the UE 120a can soft combine with the initial transmission. This is irrespective of whether the UE operates according to behavior 1A or 1B. However, where the c-CW does not include information directed to the UE 120a (Case B), retransmission of the c-CW by the network is useful only if another UE sends a NAK for the c-CW (in which case, the c-CW needs to be transmitted anyway for the purpose of the other UEs, and hence, can be also used for the UE 120a) or if the UE 120a (being the UE to NACK but the c-CW does not include information directed to this UE) has the ability to soft combine with the initial transmission (e.g., in I/Q domain).

An alternative behavior to behavior 1 will now be described and referred to as behavior 2. In this behavior, if the c-CW is not decoded, the UE still tries decoding the p-CW. In this case, there are 4 possibilities for HARQ-ACK feedback from the UE to the gNB, i.e., 2 bits are needed (i.e. 1 bit per CW).

If the c-CW is not decoded, but the p-CW is decoded, the UE sends a response (N,A). (This cannot happen in Behavior 1). Whether the UE performs soft-combining for the c-CW depends on Case A versus Case B described above - i.e. whether part of the c-CW contains information directed to this UE (case A) or not (case B). The UE assumes that the NDI for the c-CW is toggled (i.e., no soft combining) when the c-CW does not include information for the UE (Case B) and when the NDI for the p-CW is toggled (because the p-CW of the previous transmission is already decoded).

If the c-CW is not decoded and the p-CW is also not decoded, i.e., (N,N), three possible behaviors need to be considered.

The first of three is the case where the UE uses the LLRs generated as part of decoding the p-CW in the initial transmission to soft-combine with the LLRs of the p-CW of the retransmission. This can be referred to as behavior 2A and is different from the behaviors 1A-1, 1A-2, 1B-1 and 1B2.

The second of three is similar to behaviors 1A-1 and 1B-1 (depending on Case A versus Case B) and involves not soft-combining the p-CW. It is similar to behaviors 1A-1 and 1B-1 not because the UE cannot do soft-combining (in LLR domain) but because it chooses not to do so. This will be referred to as behavior 2B. This behavior is justified by the fact that UE may be better off to not soft combine, as LLRs of the p-CW of the initial transmission may be too noisy to make it worthwhile trying, given that the UE has not performed SIC for the initial transmission, as the c-CW from the initial transmission was not decoded. This behavior can be indicated to the UE by the network (either through RRC configuration or in the DCI scheduling the retransmission) causing the UE to flush its buffer for the p-CW when the c-CW is not decoded in the initial transmission.

Accordingly, a feature of the network entity may be that it sends an indicator to a UE to instruct the UE to flush its soft combine buffer when the NE receives a NACK for the c-CW and when the network knows, from channel conditions or otherwise, that it is not worthwhile for the UE to attempt soft combining.

The third of three behaviors is similar to behavior 1A-2 (which is the same as 1B-2) and is as follows. Instead of using the LLRs generated as part of decoding the p-CW in the initial transmission, the UE stores the received I/Q samples and hence can perform (and does perform) the SIC for the initial transmission once it decodes the c-CW from the retransmission. It then soft combines (if needed) with the p-CW of the retransmission. This can be referred to as behavior 2C.

Thus it has been described how a UE receives a PDSCH including an initial transmission of a c-CW and a p-CW on different sets of spatial layers of the PDSCH and attempts to decode the c-CW and p-CW, and the UE transmits a HARQ-ACK message indicative of the decoding result for the c-CW and p-CW. At least three possibilities for the HARQ-ACK message have been described.

It has been described that where at least one of the c-CW or the p-CW is not successfully decoded, the UE receives a PDSCH including a retransmission of the c-CW and/or the p-CW, and the UE combines the initial transmission of the c-CW and/or the p-CW with the retransmission of the c-CW and/or the p-CW to decode the c-CW and/or the p-CW. The retransmission(s) the UE receives is/are based at least on whether, from the initial transmission, the c-CW is decoded but the p-CW is not decoded, or the p-CW is decoded but the c-CW is not decoded, or both of the c-CW and the p-CW are not decoded.

The UE may (optionally) signal its capability to the network, and the network may use the signaled capability to determine which of the c-CW and the p-CW to retransmit in certain circumstances. In this context "capability" may be understood to include "behavior".

A first example of capability is whether the UE skips decoding of the c-CW when the c-CW in the same PDSCH (e.g., of initial transmission) is not decoded. Skipping of decoding of the c-CW is referred to as "behavior 1" and decoding the p-CW notwithstanding failure to decode the c-CW is referred to as "behavior 2". The UE may indicate (e.g. through prior signaling) which of these behaviors it adopts. This is useful to the network. E.g. in the case of a double NACK (N, N), there may be different retransmissions or other signals from the network depending on the behavior of the UE.

A second example of capability is whether UE performs SIC by firstly attempting to decode the c-CW and subtracting the contribution of the c-CW from the received signal and then attempting to decode the p-CW. This determines whether the UE operates according to behaviors 1A2, 1B-2 and 2C.

A third example of capability is whether the UE stores received I/Q samples (the soft signal before demodulation either before FFT or after FFT) for data tones of the initial transmission and the estimated channel. The ability to store received I/Q samples impacts the required buffer size at the UE. This is an alternative way of determining whether the UE operates according to behaviors 1A2, 1B-2 and 2C.

Thus, for example, the UE may indicate its buffer size and, from this, the network may infer that it has a capability to store I/Q samples and perform soft combining of such samples and, therefore it has the capability to operate according to behavior 1A-2, 1B-2 or 2C and that it does operate according to one of those behaviors (or all of them, according to the circumstances).

Alternatively, the UE may signal its "type" or "version" from which the network can draw inference as to its capability. Alternatively, the UE may specifically signal that it operates according to one or other of these behaviors. Alternatively, one of these behaviors may be a default behavior and the UE may signal that it operates according to the other behavior only if it does not adopt the default behavior.

One or more of the behaviors described can be indicated by the UE capability and/or indicated by the network either dynamically (in DCI or MAC-CE) or semistatically (in RRC), or the behavior can be a function of the conditions described above.

A fourth example of capability/behavior is whether UE flushes its buffer or performs soft-combining for c-CW and/or p-CW. This can be conditional, such as conditional on whether the UE performs soft-combining for a p-CW depending on whether the c-CW of the initial transmission is decoded or not. This is indicative of behavior 2B.

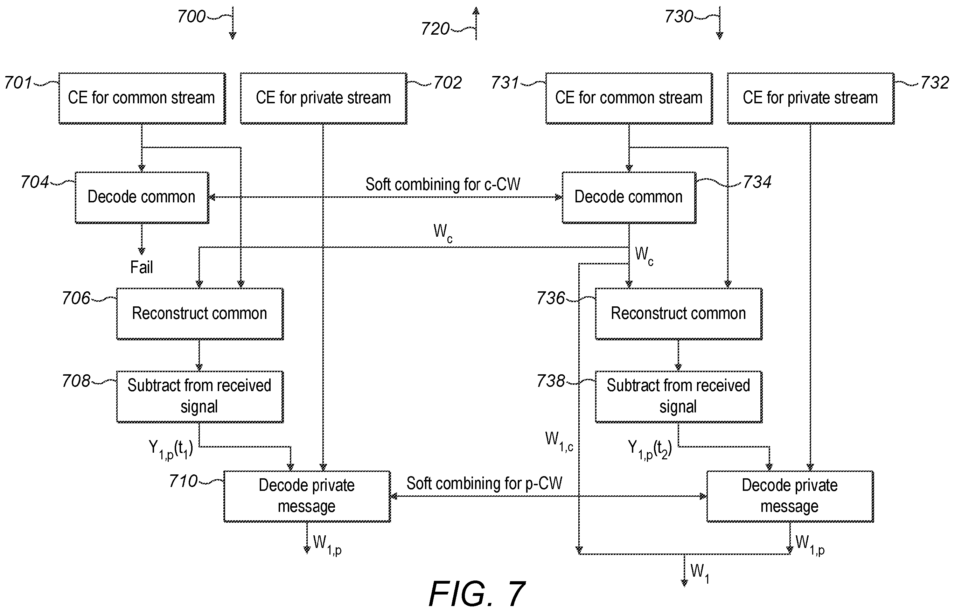

Fig. 7 illustrates a process at a UE 120a for HARQ operation in accordance with behaviors 1A-2, 1B2 and or 2C. Time is represented from left to right. Process steps are illustrated from top to bottom.

At process 700, a common stream 701 and a private stream 702, each with a respective codeword or codewords and computes corresponding channel estimates (CEs). At process 704, the UE attempts to decode a received c-CW. In this example, the case is considered where this fails. The UE may nevertheless (if it adopts behavior 2) attempt to decode a received p-CW at 710. If so, the case will be also be considered where this fails (behavior/scenario 2C).

Accordingly, the UE transmits a negative acknowledgement for both parts - equivalent to (N, N). This is indicated by process 720.

At a configured time later, the time being configured according to the HARQ protocol, the network transmits and the UE receives (730) common and private codewords and computes corresponding CEs for the common stream (731) and for the private stream (732). The initial and retransmitted c-CWs are soft combined in process 734. Assuming this is successful, the common codeword Wc is available at 706 to reconstruct the original c-CW and this can be subtracted from the original received signal to attempt to decode the original p-CW at 710. (If it is not successful, another NACK can be sent and the process can repeat.)

In the meantime, the soft-combined c-CW is also available to reconstruct the retransmitted c-CW in process 736. The reconstructed CE for the common stream is subtracted from the received common part W_{1,c} and the result is *Y*_{*1*,p}(*t₂*) which can be used to decode the private message (as previously described) to result in the decoded private part W_{1,*p*} (after demodulation and demapping). Thus, the entire codeword W₁ with its common and private parts is decoded.

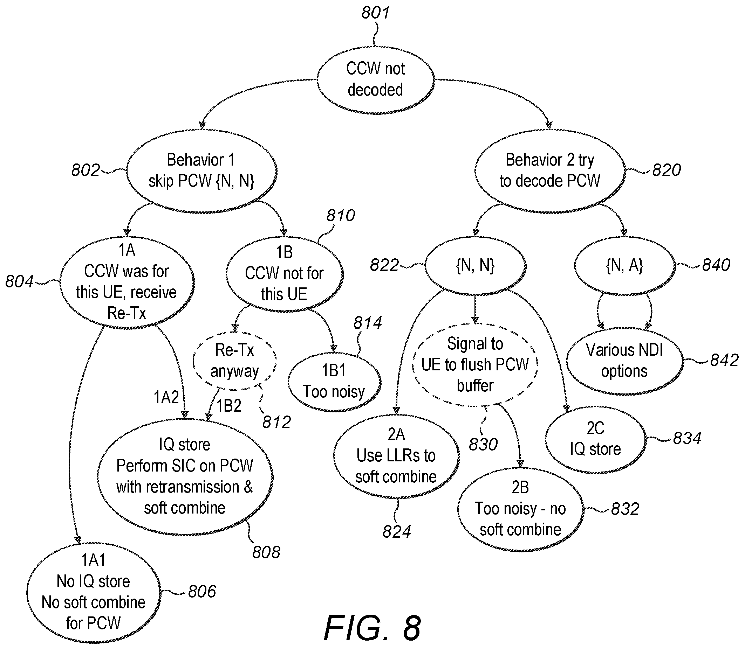

Fig. 8 summarizes the above behaviors at a UE. Fig. 8 can be considered a process flow diagram or state diagram for a UE except that a given UE adopts selected processes according to its pre-defined behavior.

Starting with the failure to decode a c-CW at state 801, the case will first be considered where the UE adopts behavior 1 (state 802). The UE skips decoding of the c-CW and transmits a NACK equivalent to (N, N).

If the c-CW contains information for this UE, this is state 804 and if the UE does not store I and Q samples and does not soft combine the p-CW, it proceeds to state 806 (behavior 1A1). If, alternatively, it stores I and Q samples and is able to perform SIC (or joint decoding) on the p-CW when it receives a retransmission, it enters state 808. This is behavior 1A2.

Considering now the case where the c-CW does not have information directed to this UE, the UE proceeds from state 802 to state 810. This is behavior 1B.

The UE can proceed from state 810 to state 814 at which it chooses not to try to decode the p-PW because the channel is deemed too noisy. This saves on processing and therefore on power and battery drain. This is behavior 1B1.

Alternatively, it can receive a retransmission from the network notwithstanding (state 812) and proceed to state 808. This is behavior 1B2.

Turning now to the alternative behavior upon failing to decode a c-CW (state 801), the UE could proceed to state 820 and attempt to decode the p-CW. This is behavior 2. If unsuccessful, it sends a double NACK (N,N) (state 822) and there are three possibilities thereafter.

The UE can use the stored LLRs to soft combine the p-CW (state 824). This is behavior 2A. Alternatively, it can receive a signal from the network in response to the NACK to flush its p-CW buffer (optional process 830) and/or proceed to state 832 at which it skips soft combining of the p-CW (whether or not the c-CW was for this UE). This is behavior 2B. The third option is for the UE to proceed to 834 where it stores I and Q samples for the p-CW, in order to perform soft-combining in the I/Q domain of one or both when a retransmission is received. This is behavior 2C.

To complete the explanation of Fig. 8, if, at 820, the UE succeeds in decoding the p-CW, it can send an acknowledgement (N, A) at process 840, from which there are several options for NDI as described above (842).

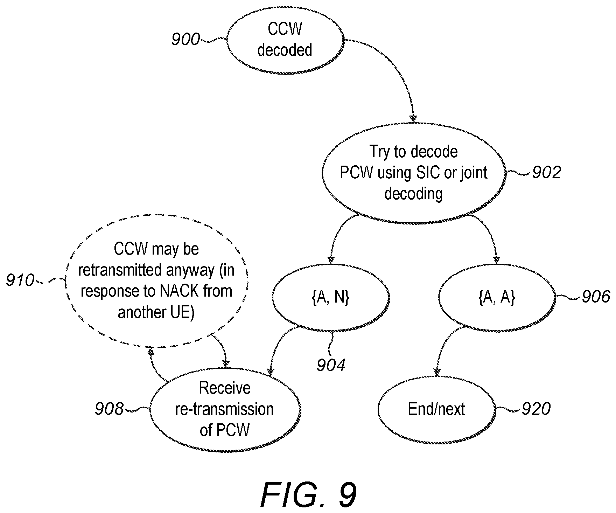

Fig. 9 illustrates states/steps/processes at the UE in the event of successful decoding of the c-CW at the UE (state 900). The UE tries to decode the p-CW using SIC or joint decoding (902). If unsuccessful, it sends an acknowledgement (A, N) at 904 and receives a retransmission of at least the p-CW at 908. Note that the c-CW may be retransmitted by the network anyway at 910, e.g. in response to a NACK from another UE.

If, from 902, the p-CW is successfully decoded the process proceeds to 906 and a complete acknowledgement (A, A) is sent. The process ends at 920, all buffers can be flushed and the network can toggle the NDI to restart the entire process (801 or 900) for the next transmission. (If there are other NACKs of the c-CW from other UEs, the NE may retransmit the c-CW but may preferentially resend the necessary unreceived information to those UEs in other ways).

Note that, in Fig. 9, an acknowledgement of successful decoding of the c-CW is sent regardless of whether the c-CW contains information for this UE.

N.B. the states in Figs 8 and 9 could be re-drawn in different hierarchy. E.g. the first separation could be between "IQ/no-IQ storage capability" or between the states "is the CCW intended for this UE?"

Fig. 10 shows a process performed at a UE. At 1000, the UE performs decoding (attempts to decode) a common codeword c-CW. At 1002 a determination is made as to whether decoding is successful. This may include checking parity bits or performing a cyclical redundancy check or other error checking. If successful, the process proceeds to 1010 and the c-CW is used to decode a received private codeword (p-CW). At 1012, a check is made to determine if this is successful. This may be similar to the process performed at 1002. If successful, the UE sends an acknowledgement for both parts (step 1014). If not, it sends and acknowledgement of the c-CW only or a negative acknowledgement of the p-CW only but preferably both (1016).

If, at 1002, the c-CW was not successfully received, the UE sends a NACK of the c-CW at 1020. Optionally it may also send a NACK for the p-CW. This may depend on the pre-adopted behavior of the UE. Thereafter (1022) the UE may, depending on its pre-adopted behavior, attempt to decode the p-CW and send an ACK or NACK for the p-CW depending on the decoding result.

Fig. 11 shows a process performed at a network entity (NE). There is an initial 1100 at with the NE received from a given UE an indication of its capability/behavior. This is received from multiple UEs. At 1102, the NE sends a c-CW and a p-CW and at 1104 it receives an acknowledgement. The scenario where the c-CW is decoded will be ignored for this explanation. That scenario follows the process already illustrated in Fig. 9.

If, at 1104, the received response is equivalent to (N, N), the process passes to 1108. If the c-CW was directed to this UE (or if another UE in need of the c-CW sent a NACK for the c-CW), the NE will re-transmit the c-CW and the p-CW (1110)

If the c-CW was not for this UE and no other UE needs the c-CW and the UE operates according to behavior 1B1, there is no point re-transmitting the c-CW. The NE re-transmits the p-CW with another c-CW (1112). The new c-CW may have data for this UE and/or for other UEs. In this way, unnecessary retransmission is avoided.

If, at 1104, the response is a complete acknowledgement, equivalent to (A, A), the NE re-transmits the c-CW only if another UE requiring the c-CW has sent a NACK (but if there is just a single UE requiring the c-CW, the NE has the option of sending that information to that UE in a p-CW or a private message, thereby permitting the process to move on). Otherwise, the NE proceeds to the next message (1120) and toggles the NDI.

At 1104, the response may be equivalent to (N,A). This can only happen with UEs that operate according to behavior 2. If there was no information in the c-CW directed to this UE, the NE will only re-transmit the c-CW if another UE needs it or a sufficient number of other UEs need it. This is process 1130. If there was information in the c-CW for this UE but no other UE needs it, the NE can re-encode that information in a new c-CW or p-CW or a combination thereof and re-transmit it. (In the same way, if only one other UE needs the information in the c-CW, the NE can send that information to that UE in a new c-CW or p-CW or a combination thereof.) If there was no information in the c-CW directed to this UE and no other UE needs it, the NE will proceed to the next message and toggle the NDI.

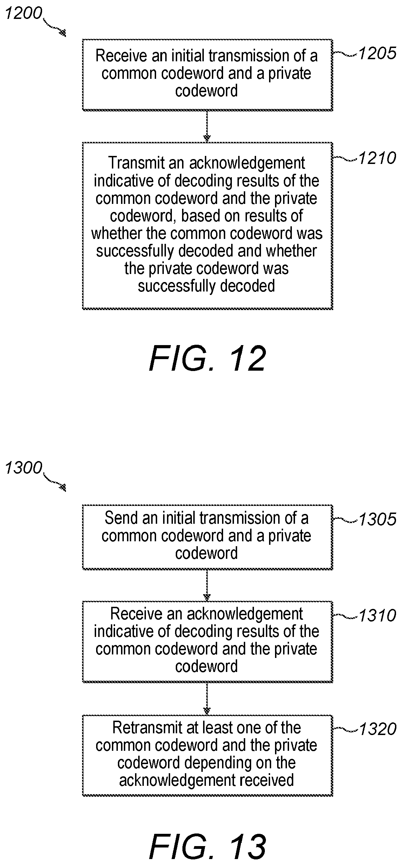

Fig. 12 shows a flowchart illustrating a method 1200 that supports communications using common and private codewords in accordance with one or more aspects of the present disclosure. The operations of the method 1200 are implemented by a UE or its components as described herein. In particular, the operations of the method 1200 are performed by a UE 120 as described with reference to Figs. 1, 2 and 4 to 10. In some examples, a UE may execute a set of instructions to control the functional elements of the UE to perform the described functions. Additionally, or alternatively, the UE may perform aspects of the described functions using special-purpose hardware.

At 1205, the method include receiving an initial transmission of a common codeword and a private codeword, wherein the common codeword is common to the UE and at least one other UE and is received in a first stream, and the private codeword is for the UE is received in a different stream.

At 1210, the method includes transmitting an acknowledgement indicative of decoding results of the common codeword and the private codeword based on results of whether the common codeword was successfully decoded and whether the private codeword was successfully decoded.

Fig. 13 shows a flowchart illustrating a method 1300 that supports communications using common and private codewords in accordance with one or more aspects of the present disclosure. The operations of the method 1300 are implemented by a NE or its components as described herein. In particular, the operations of the method 1300 are performed by a BS 110 or other NE as described with reference to Figs. 1 to 3 and 11. In some examples, a NE may execute a set of instructions to control the functional elements of the NE to perform the described functions. Additionally, or alternatively, the NE may perform aspects of the described functions using special-purpose hardware.

At 1305, the method includes sending an initial transmission of a common codeword and a private codeword, wherein the common codeword is common to a first user equipment, UE, and at least a second UE and is sent in a first stream, and the private codeword is for the first UE is sent in a different stream.

At 13110, the method includes receiving an acknowledgement indicative of decoding results of the common codeword and the private codeword.

At 13120, the method includes retransmitting at least one of the common codeword or the private codeword depending on the acknowledgement received.

Thus, a method of communication at a user entity has been described comprising: receiving an initial transmission of a common codeword and a private codeword, (preferably on a PDSCH and preferably on different sets of spatial layers of the PDSCH); attempting to decode the common codeword and the private codeword; transmitting an acknowledgement (which may be a positive or negative or a combination of positive and negative acknowledgements for the individual codeword parts) indicative of the decoding results of the common codeword and the private codeword; receiving a retransmission of at least one of the common codeword or the private codeword (depending on the acknowledgement); and combining the initial transmission and the retransmission to decode the common codeword and/or the private codeword based on which of the common codeword and the private codeword was not successfully decoded.

Decoding of the private codeword may be skipped if the common codeword is not decoded.

At least three HARQ-ACK states may be provided for, that correspond to: acknowledge decoding of both the common codeword and the private codeword; acknowledge decoding of the common codeword and negative acknowledge of the private codeword; and negative acknowledge of the common codeword and the private codeword.

HARQ-ACK states for plural channels may be combined to provide compression of the combined HARK-ACKs.

Also provided is a method of communication at a user entity comprising: receiving an initial transmission of a common codeword and a private codeword (e.g. on different sets of spatial layers); attempting to decode the common codeword and, when an initial transmission is successfully decoded, using the decoded common codeword to decode the private codeword by successive interference cancellation (SIC), but when an initial transmission is not successfully decoded, storing the decoded common codeword in a buffer, receiving a retransmission of at least the private codeword, and soft combining the initial transmission of the private codeword and the retransmission to decode (or attempt to decode) the private codeword.

Received signal samples may be stored along with a channel estimate, for use in decoding the retransmission of the private codeword.

When the initial transmission of the common codeword is successfully decoded, an indication of such may be including in a HARQ acknowledgement. This may include an indication of whether the private codeword is successfully transmitted (or not).

Also described is a method of communication at a network entity comprising: sending an initial transmission of a common codeword and a private codeword (preferably on a PDSCH and preferably on different sets of spatial layers); receiving an acknowledgement indicative of the decoding results of the common codeword and the private codeword; and sending a retransmission of at least one of the common codeword or the private codeword, based on the acknowledgement.

## Claims

1. A method of communication performed by a user equipment, UE (120), the method comprising:
receiving (1205) an initial transmission of a common codeword and a private codeword, wherein the common codeword is common to the UE and at least one other UE and is received in a first stream (701), and the private codeword is for the UE is received in a different stream (702);
transmitting (720, 1210) an acknowledgement indicative of decoding results of the common codeword and the private codeword based on results of whether the common codeword was successfully decoded and whether the private codeword was successfully decoded
receiving a retransmission of at least one of the common codeword or the private codeword, based on transmission of the acknowledgement; and
combining, based on a predetermined factor or a contextual factor or both, the initial transmission and the retransmission to decode at least an undecoded one of the common codeword or the private codeword, **characterized in that** decoding the private codeword is attempted regardless of whether the common codeword is decoded.

2. The method of claim 1, where transmitting the acknowledgment is based at least in part on the UE transmitting a capability signaling related to support for rate splitting communication or based on one or more configuration parameters received from a network entity related to rate splitting communication.

3. The method of claim 1, wherein the contextual factor includes the common codeword having included information for the UE (120), and the retransmission being retransmission thereof.

4. The method of claim 1, wherein the contextual factor includes not receiving retransmission of the common codeword when the common codeword did not include information to the UE.

5. The method of claim 1, including soft combining retransmission of the private codeword with the initial transmission of the private codeword when the initial transmission of the private codeword is not decoded.

6. The method of claim 1, wherein, upon sending a negative acknowledgement in respect of at least the common codeword, the UE receives an indication permitting the UE to flush a soft combine buffer at the UE.

7. The method of claim 1, wherein the predetermined factor includes whether the UE is provided with a capability of storing in-phase and quadrature, I and Q, samples of the initial transmission.

8. The method of claim 1, wherein the UE (120) has a capability of storing I and Q samples of the initial transmission, and the combining is performed with I and Q samples of the initial transmission and I and Q samples of the retransmission.

9. The method of claim 8, wherein the combining is performed on the common codeword.

10. The method of claim 8, wherein the combining is performed on the private codeword.

11. The method of claim 1, wherein the acknowledgement comprises one of three states that correspond to:
acknowledge decoding of both the common codeword and the private codeword;
acknowledge decoding of the common codeword and negative acknowledge of the private codeword; and
negative acknowledge of the common codeword and the private codeword.

12. The method of claim 11, further comprising combining acknowledgement states for plural channels to provide compression of acknowledgements.

13. An apparatus at a user equipment, UE (120) comprising:
a memory (282); and
a processor (258, 264, 280) coupled to the memory, the processor being configured to:
receive an initial transmission of a common codeword and a private codeword, wherein the common codeword is common to the UE and at least one other UE and is received in a first stream, and the private codeword for the UE is received in a different stream;
transmit an acknowledgement indicative of decoding results of the common codeword and the private codeword based on results of whether the common codeword was successfully decoded and whether the private codeword was successfully decoded;
receive a retransmission of at least one of the common codeword or the private codeword, based on transmission of the acknowledgement; and
combine, based on a predetermined factor or a contextual factor or both, the initial transmission and the retransmission to decode at least an undecoded one of the common codeword or the private codeword, **characterized in that** decoding the private codeword is attempted regardless of whether the common codeword is decoded.

## Patentansprüche

1. Ein Verfahren für eine Kommunikation, das durch ein Benutzergerät (User Equipment bzw. UE) (120) durchgeführt wird, wobei das Verfahren aufweist:
Empfangen (1205) einer anfänglichen Sendung eines gemeinsamen Codeworts und eines privaten Codeworts, wobei das gemeinsame Codewort für das UE und wenigstens ein anderes UE gemeinsam ist und in einem ersten Strom bzw. Datenstrom (701) empfangen wird und wobei das private Codewort für das UE ist und in einem anderen Strom (702) empfangen wird,
Senden (720, 1210) einer Bestätigung, die Decodierergebnisse des gemeinsamen Codeworts und des privaten Codeworts basierend auf Ergebnissen, ob das gemeinsame Codewort erfolgreich decodiert wurde und ob das private Codewort erfolgreich decodiert wurde, angibt,
Empfangen einer erneuten Sendung des gemeinsamen Codeworts und/oder des privaten Codeworts basierend auf der Sendung der Bestätigung, und
Kombinieren, basierend auf einem vorbestimmten Faktor und/oder einem kontextuellen Faktor, der anfänglichen Sendung und der erneuten Sendung, um wenigstens ein nicht-decodiertes des gemeinsamen Codeworts oder des privaten Codeworts zu decodieren, **dadurch gekennzeichnet, dass** das Decodieren des privaten Codeworts unabhängig davon, ob das gemeinsame Codewort decodiert wird, versucht wird.

2. Verfahren nach Anspruch 1, wobei das Senden der Bestätigung wenigstens teilweise darauf basiert, dass das UE eine Fähigkeitssignalisierung in Bezug auf eine Unterstützung für eine Ratenteilung-Kommunikation sendet, oder auf einem oder mehreren Konfigurationsparametern, die von einer Netzeinheit in Bezug auf eine Ratenteilung-Kommunikation empfangen werden, basiert.

3. Verfahren nach Anspruch 1, wobei der kontextuelle Faktor ist, dass das gemeinsame Codewort Informationen für das UE (120) eingefügt hat, und wobei die erneute Sendung eine erneute Sendung davon ist.

4. Verfahren nach Anspruch 1, wobei der kontextuelle Faktor das nicht-Empfangen einer erneuten Sendung des gemeinsamen Codeworts ist, wenn das gemeinsame Codewort keine Informationen für das UE enthielt.

5. Verfahren nach Anspruch 1, das das weiche Kombinieren einer erneuten Sendung des privaten Codeworts mit der anfänglichen Sendung des privaten Codeworts, wenn die anfängliche Sendung des privaten Codeworts nicht decodiert wird, aufweist.

6. Verfahren nach Anspruch 1, wobei beim Senden einer Negativbestätigung in Bezug auf wenigstens das gemeinsame Codewort das UE eine Angabe empfängt, die dem UE das Löschen eines Weiche-Kombination-Puffers an dem UE erlaubt.

7. Verfahren nach Anspruch 1, wobei der vorbestimmte Faktor umfasst, ob das UE mit einer Fähigkeit zum Speichern von In-Phase und Quadratur (I und Q)-Abtastungen der anfänglichen Sendung versehen ist.

8. Verfahren nach Anspruch 1, wobei das UE (120) eine Fähigkeit zum Speichern von I und Q-Abtastungen der anfänglichen Sendung aufweist und das Kombinieren mit I und Q-Abtastungen der anfänglichen Sendung und von I und Q-Abtastungen der erneuten Sendung durchgeführt wird.

9. Verfahren nach Anspruch 8, wobei das Kombinieren auf dem gemeinsamen Codewort durchgeführt wird.

10. Verfahren nach Anspruch 8, wobei das Kombinieren auf dem privaten Codewort durchgeführt wird.

11. Verfahren nach Anspruch 1, wobei die Bestätigung einen von drei Zuständen aufweist, die Folgendem entsprechen:
Bestätigen des Decodierens sowohl des gemeinsamen Codeworts als auch des privaten Codeworts,
Bestätigen des Decodierens des gemeinsamen Codeworts und Negativbestätigen des privaten Codeworts, und
Negativbestätigen des gemeinsamen Codeworts und des privaten Codeworts.

12. Verfahren nach Anspruch 11, das weiterhin das Kombinieren von Bestätigungszuständen für mehrere Kanäle für das Vorsehen einer Komprimierung von Bestätigungen aufweist.

13. Eine Vorrichtung an einem Benutzergerät (User Equipment bzw. UE) (120) aufweisend:
einen Speicher (282), und
einen Prozessor (258, 264, 280), der mit dem Speicher gekoppelt ist, wobei der Prozessor konfiguriert ist zum:
Empfangen einer anfänglichen Sendung eines gemeinsamen Codeworts und eines privaten Codeworts, wobei das gemeinsame Codewort für das UE und wenigstens ein anderes UE gemeinsam ist und in einem ersten Strom empfangen wird und wobei das private Codewort für das UE ist und in einem anderen Strom empfangen wird,
Senden einer Bestätigung, die Decodierergebnisse des gemeinsamen Codeworts und des privaten Codeworts basierend auf Ergebnissen, ob das gemeinsame Codewort erfolgreich decodiert wurde und ob das private Codewort erfolgreich decodiert wurde, angibt,
Empfangen einer erneuten Sendung des gemeinsamen Codeworts und/oder des privaten Codeworts basierend auf der Sendung der Bestätigung, und
Kombinieren, basierend auf einem vorbestimmten Faktor und/oder einem kontextuellen Faktor, der anfänglichen Sendung und der erneuten Sendung, um wenigstens ein nicht-decodiertes des gemeinsamen Codeworts oder des privaten Codeworts zu decodieren, **dadurch gekennzeichnet, dass** das Decodieren des privaten Codeworts unabhängig davon, ob das gemeinsame Codewort decodiert wird, versucht wird.

## Revendications

1. Procédé de communication effectué par un équipement d'utilisateur, UE (120), le procédé comprenant les étapes consistant à :
recevoir (1205) une transmission initiale d'un mot de code commun et d'un mot de code privé, dans lequel le mot de code commun est commun à l'UE et à au moins un autre UE et est reçu dans un premier flux (701), et le mot de code privé pour l'UE est reçu dans un flux différent (702) ;
transmettre (720, 1210) un accusé de réception indiquant les résultats de décodage du mot de code commun et du mot de code privé en fonction des résultats indiquant si le mot de code commun a été décodé avec succès et si le mot de code privé a été décodé avec succès ;
recevoir une retransmission d'au moins un mot de code commun ou du mot de code privé, sur la base de la transmission de l'accusé de réception ; et
combiner, sur la base d'un facteur prédéterminé ou d'un facteur contextuel ou des deux, la transmission initiale et la retransmission pour décoder au moins un mot non décodé parmi le mot de code commun ou le mot de code privé, **caractérisé en ce que** le décodage du mot de code privé est tenté indépendamment du fait que le mot de code commun soit décodé ou non.

2. Procédé selon la revendication 1, dans lequel la transmission de l'accusé de réception est basée au moins en partie sur l'UE transmettant une signalisation de capacité liée à la prise en charge de la communication à répartition de débit ou basée sur un ou plusieurs paramètres de configuration reçus d'une entité de réseau liée à la communication à répartition de débit.

3. Procédé selon la revendication 1, dans lequel le facteur contextuel comprend le mot de code commun ayant inclus des informations pour l'UE (120), et la retransmission étant une retransmission de celui-ci.

4. Procédé selon la revendication 1, dans lequel le facteur contextuel comprend la non-réception de la retransmission du mot de code commun lorsque le mot de code commun n'incluait pas d'informations à l'UE.

5. Procédé de la revendication 1, comprenant la retransmission avec combinaison souple du mot de code privé avec la transmission initiale du mot de code privé lorsque la transmission initiale du mot de code privé n'est pas décodée.

6. Procédé selon la revendication 1, dans lequel, lors de l'envoi d'un accusé de réception négatif concernant au moins le mot de code commun, l'UE reçoit une indication permettant à l'UE de vider une mémoire tampon de combinaison souple au niveau de l'UE.

7. Procédé selon la revendication 1, dans lequel le facteur prédéterminé comprend le fait que l'UE soit doté ou non d'une capacité de stockage d'échantillons en phase et en quadrature, I et Q, de la transmission initiale.

8. Procédé selon la revendication 1, dans lequel l'UE (120) possède une capacité de stockage d'échantillons I et Q de la transmission initiale, et la combinaison est effectuée avec des échantillons I et Q de la transmission initiale et des échantillons I et Q de la retransmission.

9. Procédé selon la revendication 8, dans lequel la combinaison est effectuée sur le mot de code commun.

10. Procédé selon la revendication 8, dans lequel la combinaison est effectuée sur le mot de code privé.

11. Procédé selon la revendication 1, dans lequel l'accusé de réception comprend l'un des trois états qui correspondent à :
accuser de réception du décodage du mot de code commun et du mot de code privé ;
accuser de réception du décodage du mot de code commun et accuser de réception négative du mot de code privé ; et
accuser de réception négatif du mot de code commun et du mot de code privé.

12. Procédé selon la revendication 11, comprenant en outre la combinaison d'états d'accusé de réception pour plusieurs canaux afin de fournir une compression des accusés de réception.

13. Un appareil au niveau d'un équipement d'utilisateur, UE (120) comprenant :
une mémoire (282) ; et
un processeur (258, 264, 280) couplé à la mémoire, le processeur étant configuré pour :
recevoir une transmission initiale d'un mot de code commun et d'un mot de code privé, dans lequel le mot de code commun est commun à l'UE et à au moins un autre UE et est reçu dans un premier flux, et le mot de code privé pour l'UE est reçu dans un flux différent ;
transmettre un accusé de réception indiquant les résultats de décodage du mot de code commun et du mot de code privé en fonction des résultats indiquant si le mot de code commun a été décodé avec succès et si le mot de code privé a été décodé avec succès ;
recevoir une retransmission d'au moins un mot de code commun ou du mot de code privé, sur la base de la transmission de l'accusé de réception ; et
combiner, sur la base d'un facteur prédéterminé ou d'un facteur contextuel ou des deux, la transmission initiale et la retransmission pour décoder au moins un mot non décodé parmi le mot de code commun ou le mot de code privé, **caractérisé en ce que** le décodage du mot de code privé est tenté indépendamment du fait que le mot de code commun soit décodé ou pas.
